# NEUE EUROPÄISCHE PATENTSCHRIFT

(11) **EP 0 311 133 B2**
(45) Veröffentlichungstag und Bekanntmachung des Hinweises auf die Entscheidung über den Einspruch: **14.12.1994**
(45) Hinweis auf die Patenterteilung: 10.04.1991
(21) Anmeldenummer: 88116736.5
(22) Anmeldetag: 08.10.1988
(51) Int. Cl.: B29C 45/03

(54) **Spritzgiessmaschine**
Injection moulding machine
Machine à mouler par injection

(30) Priorität: 09.10.1987 AT 2670/87
(43) Veröffentlichungstag der Anmeldung: 12.04.1989
(73) Patentinhaber: Engel Maschinenbau Gesellschaft m.b.H., A-4311 Schwertberg (AT)
(72) Erfinder: Leonhartsberger, Heinz, Ing., A-4311 Schwertberg (AT)
(74) Vertreter: Torggler, Paul, Dr.

(56) Entgegenhaltungen:
- DE-A- 2 048 258
- DE-A- 2 441 805
- DE-A- 3 132 949
- DE-B- 1 142 231

## Beschreibung

Die Erfindung bezieht sich auf eine Spritzgießmaschine mit einem Maschinenrahmen, einer feststehenden und einer beweglichen Formaufspannplatte, sowie einer mindestens eine Kolben-Zylindereinheit eines hydraulischen oder elektromechanischen Schließmechanismus tragenden Zylinderplatte, wobei die Zylinderplatte an der die bewegliche Formaufspannplatte abgestützt ist und die feststehende Formaufspannplatte ohne Holme ausschließlich über den Maschinenrahmen verbunden sind, so daß die während des Spritzvorganges auftretende Schließkraft und die Auftreibkraft zwischen der Zylinderplatte und der Formaufspannplatte nur Ober den Maschinenrahmen abgeleitet werden.

Eine herkömmliche Spritzgießmaschine ist beispielsweise aus der europäischen Patentschrift 88.100 bekannt. Dabei sind die Zylinderplatte und die Formaufspannplatte durch Holme miteinander verbunden, welche die beim Spritzvorgang auftretenden Axialkräfte aufnehmen. Die Holme haben jedoch den Nachteil, daß der Werkzeugwechsel erschwert wird, da der Maschinenbereich zwischen den Holmen nur erschwert zugänglich ist.

In der DE-A1 31 32 949 die den Ausgangspunkt der vorliegenden Anmeldung darstellt, ist eine Spritzgießmaschine beschrieben, die keine Holme aufweist. Die Schließkräfte konnten daher nur über den Maschinenrahmen abgeleitet werden. Allerdings beschäftigt sich die genannte Offenlegungsschrift lediglich mit dem Einspritzvorgang und gibt keinerlei näheren Hinweis auf die Ausbildung des Schließmechanismus.

Die DE-PS 20 48 258 zeigt eine holmlose Blasformmaschine mit zwei beweglichen Formaufspannplatten. Beide Formaufspannplatten sind über Kolben-Zylinder-Einheiten bewegbbar, welche am Maschinenrahmen angelenkt sind. Eine vom Maschinenrahmen unabhängige Führung sichert die raumfeste Orientierung der Formaufspannplatten, wenn sich der Maschinenrahmen bei Aufbringen der Schließkraft verformt.

Es wurde jedoch gefunden, daß eine holmlose Spritzgießmaschine einen besseren Zugang zum spritzwerkzeug bietet, wodurch die Umrüstzeiten herabgesetzt werden können. Schwierigkeiten ergeben sich jedoch dadurch, daß, da die auftretenden Schließkräfte nicht mittig abgeleitet werden können, es zu einer minimalen Verformung des Maschinenrahmens kommen kann. Daher ist das sichere Schließen des Spritzgießwerkzeuges über den gesamten Einspritzvorgang nicht gewährleistet ist.

Aufgabe der Erfindung ist es, eine holmlose Spritzgießmaschine zu schaffen, bei der auch bei starkem Schließkraftaufbau die Plattenparallelität der Formaufspannplatten und somit ein absolut dichtes Werkzeug gewährleistet ist.

Die erfindungsgemäße Aufgabe wird dadurch erreicht, daß eine der Formaufspannplatten nämlich die bewegliche Formaufspannplatte, um eine horizontale Achse kippbar gelagert ist, sodaß beim Aufbringen der Schließkraft die bewegliche Formaufspannplatte sich parallel zur feststehenden Formaufspannplatte neigt.

Besondere Ausführungen der Spritzgießmaschine sind in den Ansprüchen 2-4 angegeben.

Nachfolgend werden zwei Ausführungsbeispiele der Erfindung anhand der Figuren der beiliegenden Zeichnungen beschrieben.

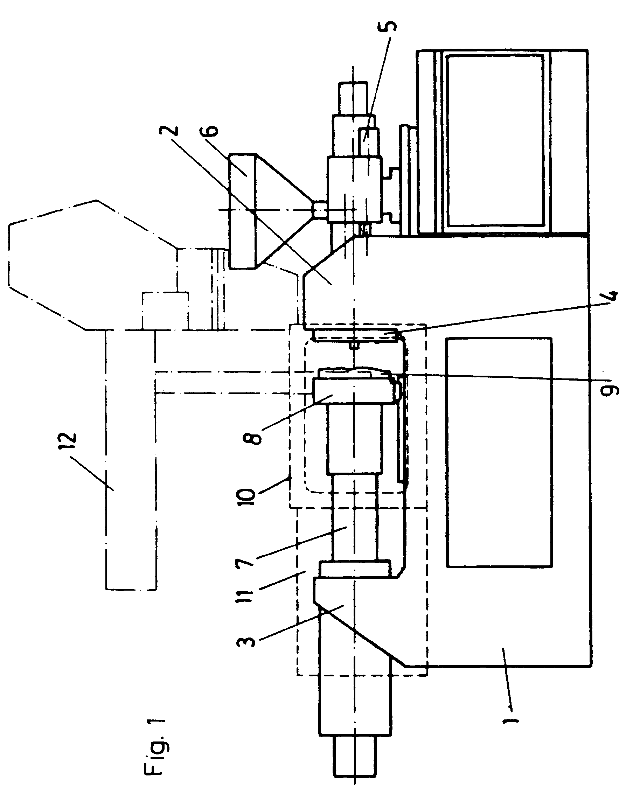

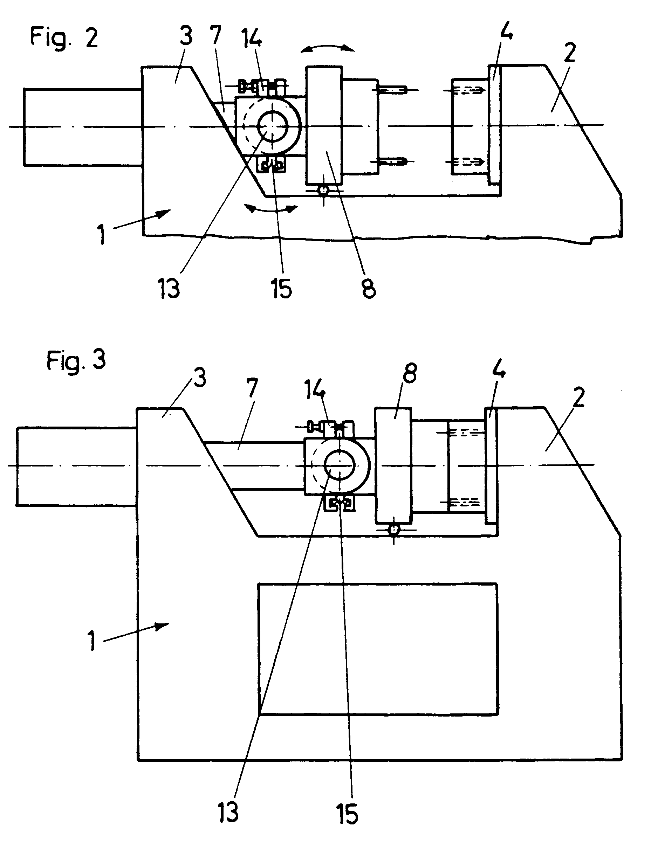

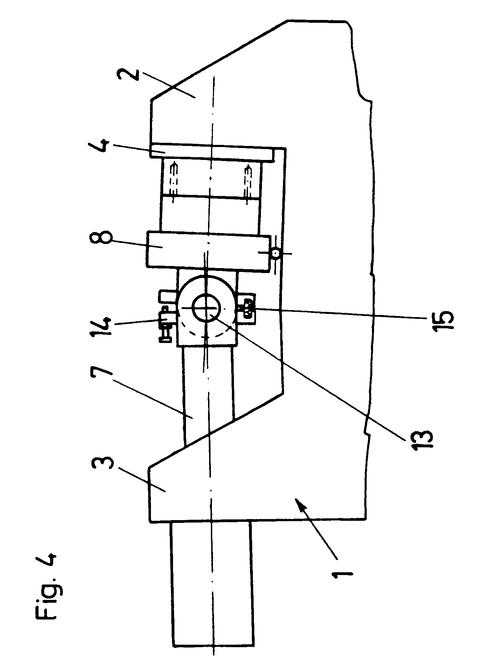

Die Figur 1 zeigt eine schematisch gehaltene Seitenansicht einer erfindungsgemäßen Spritzgießmaschine, die Figur 2 zeigt schematisch eine Seitenansicht der der Schließvorrichtung bei offener Form, die Figur 3 zeigt eine Seitenansicht der schließ-vorrichtung bei geschlossener Form, ohne daß die volle Schließkraft aufgebaut ist und die Figur 4 zeigt eine Seitenansicht der Spritzgießmaschine mit geschlossener Form bei vollem Schließkraftaufbau.

Der erfindungsgemäß wesentliche Teil der Spritzgießmaschine ist der Maschinenrahmen 1, der einstückig mit der Formaufspannplatte 2 und der Zylinderplatte 3 gefertigt ist. Das heißt, die Formaufspannplatte 2 und die Zylinderplatte 3 sind am Maschinenrahmen 1 angeformt. Wie bereits erwähnt, ist der Maschinenrahmen 1 zusammen mit der Formaufspannplatte 2 und der Zylinderplatte 3 vorteilhaft aus Sphäroguß gegossen.

Die Formaufspannplatte 2 trägt das Werkzeug 4.

An der Formaufspannplatte 2 ist das Spritzaggregat 5 mit dem Zuführtrichter 6 gelagert.

Auf das Spritzaggregat 5 soll in diesem Rahmen nicht weiter eingegangen werden, es bildet nicht Gegenstand der Erfindung und ist nach dem Stand der Technik gefertigt.

Die Zylinderplatte 3 trägt eine Kolben-Zylindereinheit 7, die ihrerseits die bewegliche Formaufspannplatte 8 trägt und die den Zuhaltemechanismus bildet.

Mittels der Kolben-Zylindereinheit 7 wird die bewegliche Formaufspannplatte 8 während des Spritzgießvorganges mit einer Werkzeugplatte 9 gegen das Werkzeug 4 der Formaufspannplatte 2 gehalten.

Bei einer Schließeinheit bei der die Schließkraft holmlos ausschließlich über den Rahmen 1 übertragen wird, kann es bei stark geführten Aufspannplatten 2,8 zu einem Aufklaffen im oberen Werkzeugbereich kommen.

Erfindungsgemäß ist daher im Kolben der Kolbenzylindereinheit 7 ein Gelenk 13 vorgesehen durch das sich die bewegliche Aufspannplatte 8 an die feststehende Aufspannplatte 4 bei hoher Schließkraft parallel anlegen kann.

Durch das Gelenk 13 kann sich die bewegliche Aufspannplatte 8 wie in der Figur 4 gezeigt neigen, sodaß die Plattenparallelität aufrecht erhalten bleibt, auch wenn die feststehende Formaufspannplatte 4 nach hinten ausweicht.

Eine Rückstellfeder 15 sorgt dafür, daß die bewegliche Formaufspannplatte 8 bei offener Form wieder in die Senkrechte zurückgeführt wird.

Durch den von einem Bolzen gebildeten Anschlag 14 oberhalb des Gelenkes 13 kann die Neigung der beweglichen Formprägeplatte 8 und damit die Plattenparallelität eingestellt werden.

Mit der erfindungsgemäßen Vorrichtung wird eine Genauigkeit der Plattenparallelität mit Abweichungen von weniger als 0,01 mm errreicht.

Wesentliches Merkmal der erfindungsgemäßen Spritzgießmaschine ist, daß sie keine Holme aufweist.

Es ist wesentlich, daß durch die erfindungsgemäße Ausführung der Spritzgießmaschine der Raum zwischen der Zylinderplatte 3 und der Formaufspannplatte 2 frei ist, und daher die Werkzeuge 4, 9 leicht zugänglich sind.

Weiterhin kann noch ein einfaches Entnahmegerät 12 vorgesehen sein.

## Patentansprüche

1. Spritzgießmaschine mit einem Maschinenrahmen (1), einer feststehenden und einer beweglichen Formaufspannplatte (2, 8), sowie einer mindestens eine Kolben-Zylindereinheit (7) eines hydraulischen oder elektromechanischen Schließmechanismus tragenden Zylinderplatte (3), wobei die Zylinderplatte (3), an der die bewegliche Formaufspannplatte (8) abgestützt ist und die feststehende Formaufspannplatte (2) ohne Holme ausschließlich über den Maschinenrahmen (1) verbunden sind, so daß die während des Spritzvorganges auftretende Schließkraft und die Auftreibkraft zwischen der Zylinderplatte (3) und der Formaufspannplatte (2) nur über den Maschinenrahmen (1) abgeleitet werden, dadurch gekennzeichnet, daß eine der Formaufspannplatten (2, 8), nämlich die bewegliche Formaufspannplatte (8), um eine horizontale Achse kippbar gelagert ist, sodaß beim Aufbringen der Schließkraft die bewegliche Formaufspannplatte sich parallel zur feststehenden Formaufspannplatte neigt.

2. Spritzgießmaschine nach Anspruch 1, dadurch gekennzeichnet, daß die Drehachse von einem Gelenk (13) im Kolben der Kolbenzylindereinheit (7) gebildet wird.

3. Spritzgießmaschine nach Anspruch 2, dadurch gekennzeichnet, daß oberhalb des Gelenkes (13) ein verstellbarer Anschlag (14) zwischen den beiden Gelenkteilen (13') vorgesehen ist, der vorzugsweise von einem Bolzen gebildet wird.

4. Spritzgießmaschine nach Anspruch 2, dadurch gekennzeichnet, daß unterhalb des Gelenkes (13) eine auf die Gelenkteile (13') drückende Rückstellfeder (15) vorgesehen ist.

## Claims

1. An injection moulding machine comprising a machine frame (1), a stationary and a movable mould mounting plate (2, 8) and a cylinder plate (3) carrying at least one piston-cylinder unit (7) of a hydraulic or electromechanical closing mechanism, where the cylinder plate (3) at which the movable mould mounting plate (8) is supported and the stationary mould mounting plate (4) are connected without struts exclusively be way of the machine frame (1) so that the closing force which occurs during the injection operation and the expansion force between the cylinder plate (3) and the mould mounting plate (2) are only passed by way of the machine frame (1), characterised in that one of the mould mounting plates (2, 8), namely the movable mould mounting plate (8), is mounted tiltably about a horizontal axis so that the movable mould mounting plate inclines parallel to the stationary mould mounting plate, when the closing force is applied.

2. An injection moulding machine according to claim 1 characterised in that the axis of rotation is formed by a pivot joint (13) in the piston of the piston-cylinder unit (7).

3. An injection moulding machine according to claim 2 characterised in that an adjustable stop (14) is provided above the pivot joint (13) between the two pivot joint members (13'), which stop is preferably formed by a bolt.

4. An injection moulding machine according to claim 2 characterised in that disposed beneath the pivot joint (13) is a return spring (15) which presses against the pivot joint members (13').

## Revendications

1. Machine de moulage par injection, avec un bâti de machine (1), un plateau porte-outillage fixe et un plateau porte-outillage mobile (2,8), ainsi qu'avec une plaque de cylindre (3) portant au moins un ensemble cylindre-piston (7) d'un mécanisme de fermeture hydraulique ou électromécanique, la plaque de cylindre (3), contre laquelle s'appuie le plateau porte-outillage mobile (8), et le plateau porte-outillage fixe (2) étant assemblés sans longerons, uniquement par l'intermédiaire du bâti de machine (1), de sorte que la force de fermeture apparaissant pendant l'opération d'injection et la force de poussée entre la plaque de cylindre (3) et le plateau porte-outillage (2) sont transmises uniquement par l'intermédiaire du bâti de machine (1), caractérisée en ce qu'un des plateaux porte-outillage (2,8), c'est-à-dire le plateau porte-outillage mobile (8), est monté basculant autour d'un axe horizontal, de sorte que le plateau porte-outillage mobile s'incline parallèlement au plateau porte-outillage fixe lorsque la force de fermeture est appliquée.

2. Machine de moulage par injection selon la revendication 1, caractérisée en ce que l'axe de rotation est constitué par une articulation (13) dans le piston de l'ensemble cylindre-piston (7).

3. Machine de moulage par injection selon la revendication 2, caractérisée en ce qu'une butée réglable (14), qui est constituée de préférence par un goujon, est prévu au-dessus de l'articulation (13), entre les deux parties d'articulation (13').

4. Machine à mouler par injection selon la revendication 2, caractérisée en ce qu'un ressort de rappel (15), appuyant sur les parties d'articulation (13'), est prévu en dessous de l'articulation (13).
